# EUROPEAN PATENT SPECIFICATION

(11) **EP 2 685 447 B1**
(45) Date of publication and mention of the grant of the patent: **05.10.2016**
(21) Application number: 11860815.7
(22) Date of filing: 23.03.2011
(51) Int. Cl.: G09G 5/36, G09G 5/00, G09G 3/00, H04N 13/04

(54) **VIDEO DISPLAY DEVICE**
VIDEOANZEIGEVORRICHTUNG
DISPOSITIF D'AFFICHAGE VIDÉO

(30) Priority: 11.03.2011 JP 2011053992
(43) Date of publication of application: 15.01.2014
(73) Proprietor: Omron Corporation, Kyoto-shi, Kyoto 600-8530 (JP)
(72) Inventor: MURAKAMI, Tatsuya, Kyoto-shi, Kyoto 600-8530 (JP); IRIE, Atsushi, Kyoto-shi, Kyoto 600-8530 (JP); SAKAI, Shun, Kyoto-shi, Kyoto 600-8530 (JP)
(74) Representative: Kilian Kilian & Partner
(86) International application number: PCT/JP2011/056907
(87) International publication number: WO 2012/124150

(56) References cited:
- WO-A1-2007/088779
- JP-A- 11 234 703
- JP-A- 2006 113 534
- JP-A- 2007 052 304
- JP-A- 2010 259 017
- JP-A- 2010 259 017
- US-A1- 2006 056 509
- US-A1- 2009 164 896

## Description

### TECHNICAL FIELD

The present invention relates to a video display device having a display unit that displays one of a 3D video and a 2D video in a switching manner.

### BACKGROUND ART

In recent years, a video display device that allows a user to visually recognize 3D images without using glasses with polarizing filters has been developed, and has started to be put to practical use in the forms of a television device, a game machine, etc.

For conventional examples of a video display device of this type, for example, Patent Document 1 discloses a device adopting a scheme (lenticular scheme) in which a lens array including cylindrical lenses is disposed in front of a video display surface, and a left-eye image and a right-eye image are separated by the lenses to allow the former one to enter the left eye and the latter one the right eye. In addition, Patent Document 2 discloses a device configured such that a right-eye image and a left-eye image are regularly mixed in a display panel plane and phase elements for setting polarization states in different directions are provided in front of the images, and light-shielding portions in projection form are formed at boundary locations between the phase elements.

In addition, Patent Document 3 discloses a video display device having the function of displaying a 3D image and a 2D image in a switching manner and provided with an imaging device for imaging an observer who is observing display. In addition, Patent Document 3 describes that alignment of the eyes of the observer is detected from an image generated by the imaging device, and when the alignment of the eyes is tilted at a predetermined angle or more, display is switched from a 3D image to a 2D image.

Patent Document 1: Japanese Unexamined Patent Publication No. 2001-133727
Patent Document 2: Japanese Unexamined Patent Publication No. 2010-32677
Patent Document 3: Japanese Unexamined Patent Publication No. 11-234703

### SUMMARY OF THE INVENTION

### PROBLEMS TO BE SOLVED BY THE INVENTION

A 3D video gives a great impact to a viewer and thus the viewer can obtain entertainment that cannot be obtained with a 2D video, but a 3D video has a problem of putting a great strain on the eyes and the brain. Hence, it is desirable not to show 3D display to young (particularly, under the age of 10) children. Even for adults, it is desirable not to view 3D display when they are tired.

In addition, even when a 3D video is displayed, unless the position and posture of a user viewing the display are appropriate, he/she cannot sufficiently experience three-dimensional recognition. In addition, the tiredness of the user increases. Hence, when viewing a 3D video, it is recommended to view display from a location away by a certain distance from a display unit. In addition, when the user does not take a posture where his/her face and line of sight are facing straight to 3D video display, trouble may occur in three-dimensional recognition.

As such, since conditions that are not appropriate for viewing a 3D video are considered, it is desirable to select whether to display a 3D video or a 2D video, according to the conditions of a user viewing the image. However, allowing a general user to perform operation for display selection makes him/her feel troublesome. In addition, despite the fact that the conditions are not appropriate for 3D display, 3D display may be selected, and as a result, a problem such as damaging the health may occur.

The invention described in Patent Document 3 is to switch between 3D display and 2D display depending on whether the alignment direction of the eyes is along a horizontal line of a display unit. But such a method can only deal with the problem concerning the directions of the user's face and line of sight among various problems described above. Moreover, with the method of Patent Document 3, if the alignment direction of the eyes is horizontal, then even if the user's face is facing crosswise to the display unit, 3D display is performed. Therefore, it is difficult to consider that the accuracy of switching of display according to the user's posture is obtained sufficiently.

JP 2010 259017 A discloses a display device comprising a detecting element for detecting a distance of a user from a screen based on the size of the user or the user's face, wherein a 2D video or a 3D video is displayed on the screen depending on the detected distance.

Further relevant prior art is disclosed in US 2006/056509 A1 and US 2009/164896 A1.

The present invention focuses on the above-described problems, and an object of the present invention is to accurately estimate the utilization status of a user viewing video display and automatically select and display, based on the estimation result, an image in a mode suitable for the user's current conditions.

### MEANS FOR SOLVING THE PROBLEM

The object is solved by a video display device according to claim 1.

A further preferred embodiment of the invention is defined by the dependent claim.

A video display device according to an aspect includes a display unit that displays one of a 3D video and a 2D video In a switching manner; imaging means for imaging a user located in front of the display unit; face detection means for detecting a face of the user from an image generated by the imaging means; image selection means for estimating a utilization status of the user by analyzing features of the face detected by the face detection means, and selecting, based on a result of the estimation, whether to display the 3D or 2D video; and display control means for outputting the video selected by the image selection means to the display unit.

According to the above-described configuration, when, as a result of estimation of the utilization status of the user based on the results of analysis of the features of the user's face, it is estimated that the utilization status is suitable for displaying a 3D video, a 3D video is displayed, and when it is estimated that the utilization status is not suitable for displaying a 3D video, a 2D video is displayed. Thus, display suitable for the utilization status can be performed without putting any burden on the user.

In a first embodiment of the video display device, the image selection means estimates a position of the user with respect to the display unit, based on at least one of a size of the face and a distance between facial organs detected by the face detection means, and selects the 3D video when the estimated position is included in a predetermined reference area, and selects the 2D video when the estimated position is out of the reference area. According to this configuration, when the user is viewing the display unit at a location suitable for experiencing three-dimensional recognition, a 3D moving image is displayed, but when the user is too close to the display unit or when the user is at a location very far away from the display unit, a 2D moving image is displayed.

In a not claimed second embodiment of the video display device, the image selection means estimates whether the user is viewing the display unit from a front side thereof, based on facial organ detection results obtained by the face detection means, and selects the 3D video when it is estimated that the user is viewing from the front side, and selects the 2D video when it is estimated that the user is not viewing from the front side. According to this configuration, when the user's face and eyes are facing in a direction suitable for experiencing three-dimensional recognition, a 3D video is displayed, and in other cases a 2D video is displayed.

In a not claimed third embodiment of the video display device, the image selection means estimates an age of the user from the features of the face detected by the face detection means, and selects the 3D video when the estimated age is over a predetermined reference age, and selects the 2D video when the estimated age is under the reference age. According to this configuration, a 3D video can be prevented from being displayed when a young child is viewing display.

In a not claimed fourth embodiment of the video display device, the image selection means estimates whether the user is tired, based on a change in face detected by the face detection means during a predetermined period of time, and selects the 3D video when it is estimated that the user is not tired, and selects the 2D video when it is estimated that the user is tired. According to this configuration, when a change indicating tiredness, such as an increase in the number of blinks or movements of the eyeballs or a yawn, appears on the user's face, a 3D video can be prevented from being displayed.

The video display device of the present invention can be provided in the forms of a television device, a game machine, a personal computer, etc.

### EFFECT OF THE INVENTION

According to the present invention, a utilization status is estimated from the features of the user's face, and a selection whether to display a 3D or 2D video is made based on the estimation result. Thus, a video suitable for the utilization status can be automatically selected and displayed without putting any burden on the user. In addition, when the utilization status is changed, too, the display can be switched according to the change.

### BRIEF DESCRIPTION OF THE DRAWINGS

Fig. 1 is a block diagram showing a configuration of a television device to which the present invention is applied.
Fig. 2 is a flowchart showing a first example of an image selection process.
Fig. 3 is a flowchart showing a not claimed second example of an image selection process.
Fig. 4 is a flowchart showing a not claimed third example of an image selection process.
Fig. 5 is a flowchart showing a not claimed fourth example of an image selection process.

### MODE FOR CARRYING OUT THE INVENTION

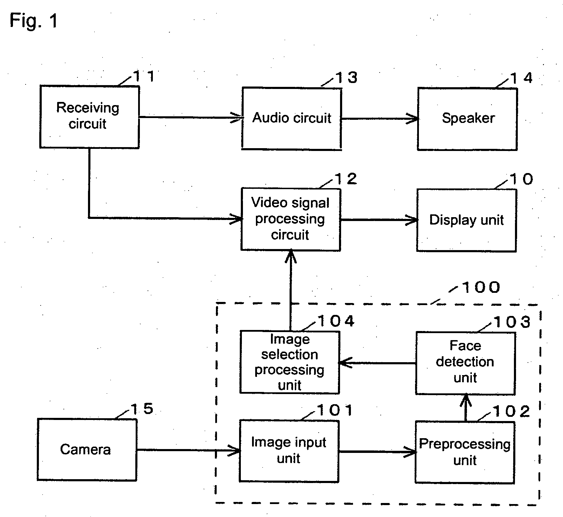

Fig. 1 shows an exemplary configuration of a television device to which the present invention is applied.

The television device includes a display unit 10 capable of displaying 3D videos and also includes, as a basic configuration, a receiving circuit 11, a video signal processing circuit 12, an audio circuit 13, a speaker 14, etc.

The receiving circuit 11 accepts a signal received by an antenna which is not shown from a broadcast station, and demodulates the signal and thereby obtains video signals for a 2D video and a 3D video and an audio signal. Each video signal is inputted to the video signal processing circuit 12. The circuit 12 selects either one of the video signals and outputs the selected video signal to the display unit 10. The audio signal is outputted to the speaker 14 from the audio circuit 13. By these processes, a 2D or 3D video for a received program is displayed on the display unit 10, and at the same time audio associated with an image being displayed is outputted from the speaker 14.

A camera 15 and an image processing device 100 are incorporated in the television device of the embodiment, as means for selecting an image to be processed by the video signal processing circuit 12.

The camera 15 is a digital video camera, and a lens thereof is fixed at the right place on the front side of a main body of the television device. The image processing device 100 takes the form of a board having mounted thereon an interface circuit and a microcomputer for the camera 15. By a program installed on a computer, the functions of an image input unit 101, a preprocessing unit 102, a face detection unit 103, an image selection processing unit 104, etc., are set on the image processing device 100.

The image input unit 101 captures an image from the camera 15 every fixed period of time and stores the image in a memory which is not shown. The preprocessing unit 102 detects, as a processing target region, an area including a user's face, based on colors, etc., in the inputted image and extracts feature points and feature amounts which are used for face detection from an image in the region. The face detection unit 103 detects a user's face and facial organs from the processing target region, based on the processing results obtained by the preprocessing unit 102. Note that since existing face detection techniques can be applied to the processes performed by the preprocessing unit 102 and the face detection unit 103, a detailed description thereof is omitted.

The image selection processing unit 104 estimates a utilization status of the viewing user, using the features of the face detected by the face detection unit 103. Based on the estimation result, the image selection processing unit 104 selects an image that is considered to be suitable for display in view of the utilization status of the user, from among a 2D video and a 3D video. The selection result is provided to the video signal processing circuit 12, and the video signal for the selected video is outputted to the display unit 10.

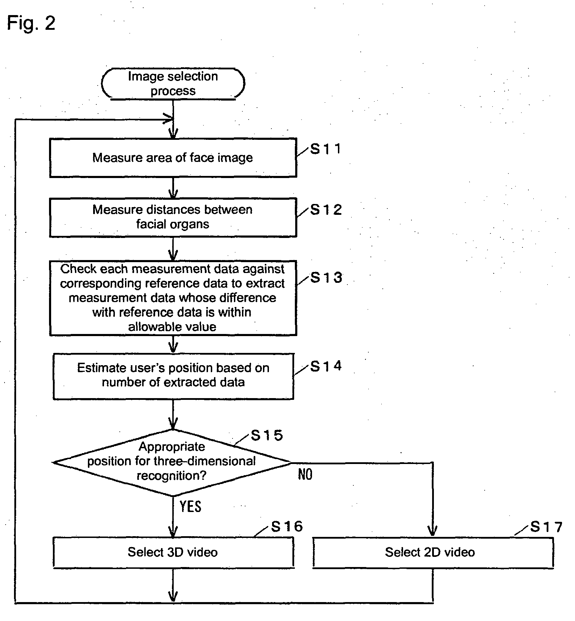

In the following, four embodiments are presented as specific examples of a process performed by the image selection processing unit 104, and processing contents in the embodiments will be described with reference to Figs. 2 to 5, respectively.

### <First embodiment>

This embodiment is targeted for displaying a 3D video when a user is at a location suitable for three-dimensional recognition. Specifically, in the embodiment, assuming that a distance that is three times the height of a screen of the display unit 10 is a distance suitable for viewing a 3D video (hereinafter, referred to as "standard viewing distance"), images of a considerable number of persons are analyzed in advance to obtain reference data on the size of a face image and the distances between facial organs (eyes, eyebrows, nose, and mouth) (including the distance between the left and right eyes and the distance between the left and right eyebrows) which are obtained when a user is at a location away by the standard viewing distance from the display unit. A flowchart shown in Fig. 2 is carried out based on the premise that those reference data are registered in the image processing device 100.

At the first step S11 of the process, by a method for counting the number of pixels of a face image detected by the face detection unit 103, the area of the face image is measured. At step S12, the distances between facial organs are measured.

At step S13, the measurement values obtained by the processes at steps S11 and S12 are checked against their respective corresponding reference data to extract measurement data whose difference with the reference data is within a predetermined allowable value.

At step S14, the user's position is estimated based on the number of the data extracted by the process at step S13. For example, when the number of extracted data exceeds a predetermined threshold value, it is estimated that the user is at a location suitable for three-dimensional recognition. In this case, step S15 is "YES" and thus processing proceeds to step S16 and a 3D video is selected.

On the other hand, when the number of extracted data is less than or equal to the threshold value, it is estimated that the user is at a location not suitable for three-dimensional recognition. In this case, step S15 is "NO" and thus processing proceeds to step S17 and a 2D video is selected.

Note that although in the above-described embodiment an estimation process using two types of parameters, the size of a user's face and the distances between facial organs, is performed, only either one of the parameters may be used. On the other hand, to improve the accuracy of estimation, the size of a body portion, etc., may be added to the elements of the estimation process, in addition to the user's face. In addition, when the user's location needs to be determined with a higher degree of accuracy, a stereo camera may be used as the camera 15 and three-dimensional measurement may be performed targeting on the features of the face.

According to the above-described process, a 3D video is displayed only when the user is in the neighborhood of a location corresponding to the standard viewing distance, and a 2D video is displayed when the user is closer to the display unit 10 than the location corresponding to the standard viewing distance or when the user is far away from the location corresponding to the standard viewing distance. Thus, when a 3D video is displayed, the user can stably experience three-dimensional recognition.

Note, however, that even when it is estimated that the user's position is not appropriate, if the user's position can be brought to an appropriate state by adjusting an image display area, then such an adjustment may be made to display a 3D video. For example, when, although the number of data extracted at step S13 is less than or equal to the threshold value, each measurement data is larger than the reference data, the user is considered to be present at a location closer to the display unit than the location corresponding to the standard viewing distance, and thus, the image display area on the display unit may be reduced and a 3D video may be displayed in the area.

### <Not claimed second embodiment>

In order for the user to experience three-dimensional recognition when a 3D video is displayed, the direction of the line of sight and the orientation of the face need to be adjusted such that a right-eye image enters the right eye of the user and a left-eye Image enters the left eye. In view of this point, in a second embodiment, the direction of the user's line of sight and the orientation of the user's face with respect to the display unit 10 are estimated, and a display target image is selected based on the estimation results.

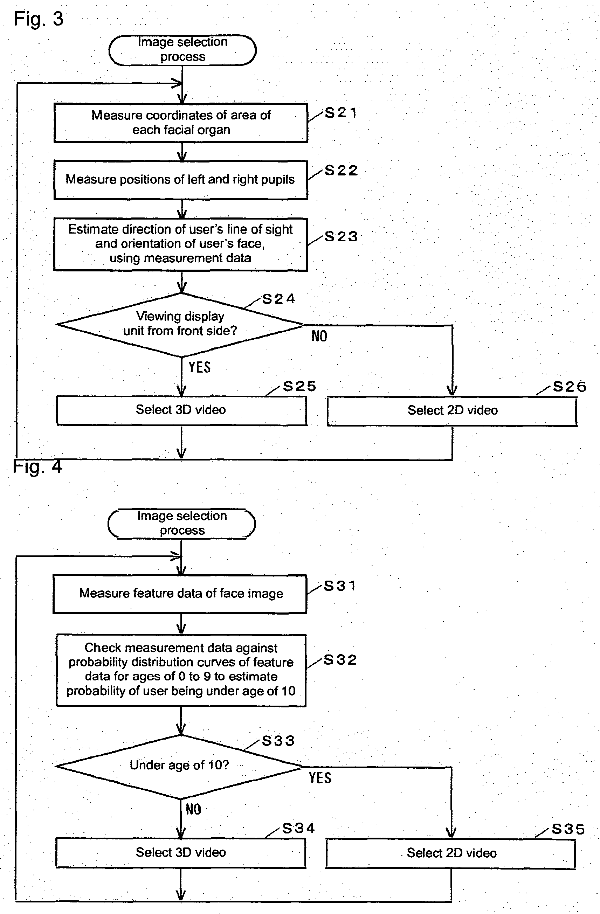

A specific processing procedure will be described using Fig. 3. At the first step S21 of the process, based on the processing results obtained by the face detection unit 103, for each facial organ, the coordinates of an area including the facial organ are measured. At step S22, the positions of the left and right pupils (e.g., the coordinates of the center of gravity) are measured.

At step S23, using the measurement data obtained by the processes at steps S21 and S22, the direction of the user's line of sight and the orientation of the user's face are estimated. For example, the distances from the left and right eyes or eyebrows to the nose are measured. When the distances from the left and right are substantially equal to each other, it is estimated that the front side of the user's face is in a state of facing the display unit 10. When the distances from the left and right are different from each other, it is estimated that the face is facing the side of the display unit 10. In addition, when it is estimated that the front side of the face is facing the display unit 10, it is estimated from the positional relationship of the pupils with respect to the entire eye area whether the line of sight is directed to the front side or is directed in a diagonal direction.

If it is estimated from these estimation results that the user is viewing the display unit 10 from the front side, then step S24 is "YES" and thus processing proceeds to step S25 and a 3D video is selected. On the other hand, if the estimation results that the user is not viewing the display unit 10 from the front side are obtained, then step S24 is "NO" and thus processing proceeds to step S26 and a 2D video is selected.

According to the above-described second embodiment, since a 3D video is displayed only when the direction of the user's line of sight and the orientation of the user's face are in a state suitable for obtaining three-dimensional recognition, the user views a video, naturally taking the right posture.

Note that the second embodiment may be performed in combination with the first embodiment. In this case, a 3D video is displayed when the user is viewing the display unit 10 from the front side and at a location suitable for three-dimensional recognition, and a 2D video is displayed in other cases.

### <Not claimed third embodiment>

In this embodiment, a user's age is estimated from face detection results, and a video to be displayed is selected based on the estimation result.

Since display of a 3D video puts strain on the eyes and the brain, it is advised not to show 3D videos to children under the age of 10. In view of this point, in this embodiment, when the user's estimated age is under 10, a 2D video is selected. To do so, in the embodiment, a considerable number of sample images of the faces of children between the ages of 0 and 9 are analyzed in advance to select several types of feature data suitable for detecting the faces of children in such an age group (e.g., the colors of the whites of the eyes and lips and the degree of variations in skin color in the entire face), and for each type of data, a probability distribution curve for the values of the feature data is obtained.

A process shown in Fig. 4 is performed based on the premise that those probability distribution curves are registered in the image processing device 100. First, at step S31, a face image detected by the face detection unit 103 is processed in detail to measure each type of feature data. At step S32, the extracted feature data are checked against their respective corresponding registered probability distribution curves to estimate the probability of the user being under the age of 10. For example, for each type of feature data, the probability of the feature data matching children under the age of 10 is determined based on a corresponding probability distribution curve, and an average value of the probabilities is compared with a predetermined threshold value.

If it is estimated by the above-described process that the user is under the age of 10, then step S33 is "YES" and thus processing proceeds to step S35 and a 2D video is selected. On the other hand, if it is estimated that the user is over the age of 10, then step S33 is "NO" and thus processing proceeds to step S34 and a 3D video is selected.

According to the above-described process, when a child under the age of 10 is viewing, a 3D video can be prevented from being displayed, and thus, the young children's health can be protected.

Note that when the faces of a plurality of persons are detected by a process performed by the face detection unit 103, it is desirable that steps S31 to S33 be performed for each detected face and when even a single person is estimated to be under the age of 10, a 2D video be selected. By doing so, for example, when a young child is viewing with his/her parents, display according to the child can be performed.

In addition, when a face image of a user who is not suitable for viewing 3D videos is registered in advance, instead of performing the process shown in Fig. 4, a 2D video may be selected when the registered face image is detected, and a 3D video may be selected in other cases.

### <Not claimed fourth embodiment>

As described above, since display of a 3D video puts strain on the eyes and the brain, even for adults it is better not to view a 3D video when they are tired. In view of this point, in this embodiment, it is estimated whether a user is tired, based on facial movement detected by the face detection unit 103, and an image suitable for the estimation result is selected.

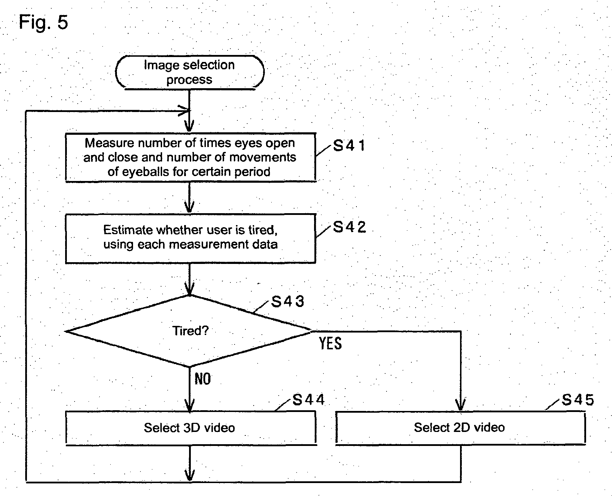

A specific processing procedure will be described with reference to Fig. 5. In this embodiment, changes in eye detection results during a period of a certain length are analyzed to measure the number of times the eyes open and close and the number of movements of the eyeballs (step S41). The number of times the eyes open and close indicates the frequency of blinks, and the number of movements of the eyeballs indicates the degree of instability of the line of sight. Thus, in this embodiment, the above-described measurement data are used as parameters for estimating user's tiredness.

At step S42, it is estimated whether the user is tired, using each counting data obtained at step S41. For example, each counting data is compared with corresponding pre-registered reference data, and when either one of the counting data exceeds the reference data, it is estimated that the user is tired.

Though not shown in Fig. 5, it is also possible to perform, in parallel with the process at step S41, the process of detecting an action indicating user's tiredness and perform an estimation process taking into consideration the detection result. For example, an action where the mouth opens for a predetermined period of time or more may be detected as a yawn and the appearance of the features of hand fingers near the eye may be detected as an eye rubbing action, and when these actions are detected, it may be estimated that the user is tired.

If it is determined by the above-described estimation process that the user is not tired, then step S43 is "NO" and thus processing proceeds to step S44 and a 3D video is selected. On the other hand, if it is determined that the user is tired, then step S43 is "YES" and thus processing proceeds to step S45 and a 2D video is selected.

According to the above-described embodiment, since a 3D video can be prevented from being displayed when the user is tired, the user's health can be protected. Note that in this embodiment, too, when the faces of a plurality of persons are detected, it is desirable that steps S41 and S42 be performed for each person and when there is even a single person who is determined to be tired, a 2D video be selected.

The processes shown in Figs. 2 to 5 are all repeatedly performed every certain period of time. Thus, even if a 3D video is displayed first, when a later utilization status turns to a state not suitable for 3D video display, the display is switched to a 2D video. Hence, even when the user's position or posture is changed or the user is switched to a different person, such a change can be dealt with promptly.

Note, however, that instead of immediately performing switching of image display in response to a change in estimation result, display may be switched on condition that the same estimation result is continuously obtained a predetermined number of times or more after the change. By doing so, for example, even when the user makes a little movement or changes the orientation of his/her face when a 3D video is displayed in the first embodiment or the second embodiment, if the period during which a change to such an action is made is very short, then the 3D video display can be maintained.

When in the third embodiment and the fourth embodiment it is estimated that the state has been changed from one in which a 3D video is selected to one in which a 2D video should be selected, the user's face and the direction of the line of sight may be estimated by the same processes as those at steps S21 to S23 in the second embodiment (Fig. 3), and when it is estimated that the user is not viewing the display unit 10 from the front side, the selection of the 3D video may be maintained.

In addition, in all of the embodiments, when a state in which the eyes of a detected face are closed continues for a predetermined period of time or more, it is determined that the user is dozing off and thus the estimation process may be canceled and display of an image being selected may be maintained.

### DESCRIPTION OF SYMBOLS

- 10:: Display unit
- 12:: Video signal processing circuit
- 15:: Camera
- 100:: Image processing device
- 101:: Image input unit
- 102:: Preprocessing unit
- 103:: Face detection unit
- 104:: Image selection processing unit

## Claims

1. A video display device comprising:
a display unit (10) that displays one of a 3D video and a 2D video in a switching manner;
face detection means (103) for detecting a face and facial organs of a user from an image generated by imaging means (101);
image selection means (104) for estimating a utilization status of the user by analyzing features of the face detected by the face detection means (103), and selecting, based on a result of the estimation, whether to display the 3D or 2D video, and configured to measure, by a method for counting the number of pixels of a face image detected by the face detection means (103), a size of a face and a distance between each facial organ detected by the face detecting means (103) for obtaining measurement data and to estimate a position of the user with respect to the display unit (10), based on the size of the face and the distance between facial organs detected by the face detection means (103);
registration means (100) in which reference data, which are based on an analysis of images of a considerable number of persons at a location away by a standard viewing distance from the display unit (10), on the size of a face image and the distances between facial organs are registered, wherein
the image selection means (104) is further configured (i) to extract, from the measurement data, measurement data whose difference with the reference data is within a predetermined allowable value, (ii) to determine a number of the extracted measurement data and (iii) to estimate the user's position based on the determined number,
to select to display the 3D video when the determined number exceeds a predetermined threshold value; and
to select to display the 2D video when the determined number is less than or equal to the threshold value; and
display control means (12) for outputting the video selected by the image selection means (104) to the display unit (10), wherein
the image selection means (104) is further configured to select to display the 3D video when each measurement data is larger than the reference data although the determined number is less than or equal to the threshold value; and
the display control means (12) is configured to reduce an image display area on the display unit (10) when each measurement data is larger than the reference data and the determined number is less than or equal to the threshold value, and to display the 3D video on the reduced image display area.

2. The video display device according to claim 1, wherein the image selection means (104) is further configured to estimate whether the user is viewing the display unit (10) from a front side thereof, based on facial organ detection results obtained by the face detection means (103), and to select the 3D video when It is estimated that the user is viewing from the front side, and to select the 2D video when it is estimated that the user is not viewing from the front side.

## Patentansprüche

1. Videoanzeigevorrichtung, umfassend:
eine Anzeigeeinheit (10), die entweder ein 3D Video oder ein 2D Video in einer umschaltenden Art und Weise anzeigt;
Gesichtserkennungsmittel (103) zum Erkennen eines Gesichts und von Gesichtsorganen eines Benutzers aus einem Bild, das durch Bildgewinnungsmittel (101) erzeugt wurde;
Bildauswahlmittel (104) zum Einschätzen eines Nutzbarmachungszustandes des Benutzers, indem Merkmale des Gesichts, das durch die Gesichtserkennungsmittel(103) erkannt wurde, analysiert werden, und zum Auswählen, basierend auf einem Ergebnis der Einschätzung, ob das 3D oder 2D Video angezeigt wird, und die eingerichtet sind, durch ein Verfahren zum Zählen der Anzahl von Pixeln eines Gesichtsbildes, das durch die Gesichtserkennungsmittel (103) erkannt wurde, eine Größe eines Gesichts und einen Abstand zwischen jedem Gesichtsorgan, die durch die Gesichtserkennungsmittel (103) erkannt wurden, zum Erhalt von Messdaten zu messen und eine Position des Benutzers in Bezug auf die Anzeigeeinheit (10) basierend auf der Größe des Gesichts und dem Abstand zwischen Gesichtsorganen, die durch die Gesichtserkennungsmittel (103) erkannt wurden, einzuschätzen;
Registrierungsmittel (100), in denen Referenzdaten, die auf einer Analyse von Bildern einer erheblichen Anzahl von Personen, die sich an einem um einen Standardbetrachtungsabstand von der Anzeigeeinheit (10) entfernten Ort befinden, auf der Größe eines Gesichtsbilds und auf den Abständen zwischen Gesichtsorganen basieren, registriert sind, wobei
die Bildauswahlmittel (104) ferner eingerichtet sind, (i) Messdaten aus den Messdaten zu extrahieren, deren Differenz zu den Referenzdaten innerhalb eines vorbestimmten erlaubten Werts liegt, (ii) eine Anzahl der extrahierten Messdaten zu bestimmen, und (iii) die Position des Benutzers basierend auf der bestimmten Anzahl einzuschätzen,
auszuwählen, das 3D Video anzuzeigen, wenn die bestimmte Anzahl einen vorbestimmten Schwellenwert überschreitet; und
auszuwählen, das 2D Video anzuzeigen, wenn die bestimmte Anzahl kleiner oder gleich dem Schwellenwert ist; und
Anzeigesteuerungsmittel (12) zum Ausgeben des durch die Bildauswahlmittel (104) ausgewählten Videos an die Anzeigeeinheit (10), wobei
die Bildauswahlmittel (104) ferner eingerichtet sind, auszuwählen, das 3D Video anzuzeigen, wenn jede Messdaten größer als die Referenzdaten sind, obwohl die bestimmte Anzahl kleiner oder gleich dem Schwellenwert ist; und
die Anzeigesteuerungsmittel (12) eingerichtet sind, einen Bildanzeigebereich auf der Anzeigeeinheit (10) zu reduzieren, wenn jede Messdaten größer als die Referenzdaten sind und die bestimmte Anzahl kleiner als oder gleich dem Schwellenwert ist, und das 3D Video in dem reduzierten Bildanzeigebereich anzuzeigen.

2. Videoanzeigevorrichtung nach Anspruch 1, wobei die Bildauswahlmittel (104) ferner eingerichtet sind, basierend auf durch die Gesichtserkennungsmittel (103) erhaltenen Gesichtsorganerkennungsergebnissen einzuschätzen, ob der Benutzer die Anzeigeeinheit (10) von ihrer Vorderseite aus betrachtet, und das 3D Video auszuwählen, wenn eingeschätzt wird, dass der Benutzer von der Vorderseite aus betrachtet, und das 2D Video auszuwählen, wenn eingeschätzt wird, dass der Benutzer nicht von der Vorderseite aus betrachtet.

## Revendications

1. Dispositif d'affichage vidéo comprenant :
une unité d'affichage (10) qui affiche soit une vidéo 3D, soit une vidéo 2D d'une manière par commutation ;
un moyen de détection de visage (103) pour détecter un visage et des organes du visage d'un utilisateur à partir d'une image générée par un moyen d'imagerie (101) ;
un moyen de sélection d'image (104) pour estimer un état d'utilisation de l'utilisateur en analysant des caractéristiques du visage détecté par le moyen de détection de visage (103) et pour sélectionner, sur la base d'un résultat de l'estimation, s'il convient d'afficher la vidéo 3D ou 2D et configuré de manière à mesurer, au moyen d'un procédé permettant de compter le nombre de pixels d'une image de visage détectée par le moyen de détection de visage (103), une dimension d'un visage et une distance entre chaque organe du visage détecté par le moyen de détection de visage (103) pour obtenir des données de mesure et de manière à estimer une position de l'utilisateur par rapport à l'unité d'affichage (10), sur la base de la dimension du visage et de la distance entre des organes du visage détectés par le moyen de détection de visage (103) ;
un moyen d'enregistrement (100) dans lequel des données de référence, qui sont basées sur une analyse d'images d'un nombre considérable de personnes en une localisation éloignée d'une distance de visualisation standard par rapport à l'unité d'affichage (10), concernant la dimension d'une image de visage et les distances entre des organes du visage sont enregistrées, dans lequel :
le moyen de sélection d'image (104) est en outre configuré (i) de manière à extraire, à partir des données de mesure, des données de mesure dont une différence par rapport aux données de référence est à l'intérieur d'une valeur admissible prédéterminée, (ii) de manière à déterminer un nombre des données de mesure extraites et (iii) de manière à estimer la position d'utilisateur sur la base du nombre déterminé,
de manière à sélectionner d'afficher la vidéo 3D lorsque le nombre déterminé excède une valeur de seuil prédéterminée ; et
de manière à sélectionner d'afficher la vidéo 2D lorsque le nombre déterminé est inférieur ou égal à la valeur de seuil ; et
un moyen de commande d'affichage (12) pour émettre en sortie la vidéo sélectionnée par le moyen de sélection d'image (104) sur l'unité d'affichage (10), dans lequel :
le moyen de sélection d'image (104) est en outre configuré de manière à sélectionner d'afficher la vidéo 3D lorsque chaque donnée de mesure est plus grande que la donnée de référence bien que le nombre déterminé soit inférieur ou égal à la valeur de seuil ; et
le moyen de commande d'affichage (12) est configuré de manière à réduire une aire d'affichage d'image sur l'unité d'affichage (10) lorsque chaque donnée de mesure est plus grande que la donnée de référence et que le nombre déterminé est inférieur ou égal à la valeur de seuil et de manière à afficher la vidéo 3D sur l'aire d'affichage d'image réduite.

2. Dispositif d'affichage vidéo selon la revendication 1, dans lequel le moyen de sélection d'image (104) est en outre configuré de manière à estimer si oui ou non l'utilisateur est en train de visualiser l'unité d'affichage (10) depuis son côté avant, sur la base de résultats de détection d'organe de visage obtenus par le moyen de détection de visage (103) et de manière à sélectionner la vidéo 3D lorsqu'il est estimé que l'utilisateur est en train de visualiser depuis le côté avant et de manière à sélectionner la vidéo 2D lorsqu'il est estimé que l'utilisateur n'est pas en train de visualiser depuis le côté avant.
